# EUROPÄISCHE PATENTANMELDUNG

(11) **EP 0 693 817 A2**
(43) Veröffentlichungstag der Anmeldung: **24.01.1996**
(21) Anmeldenummer: 95111420.6
(22) Anmeldetag: 20.07.1995
(51) Int. Cl.: H02K 29/00

(54) **Elektronisch kommutierter Gleichstrommotor**

(30) Priorität: 22.07.1994 DE 4425999
(71) Anmelder: Alcatel SEL Aktiengesellschaft, D-70435 Stuttgart (DE)
(72) Erfinder: Moser, Dieter, D-79848 Bonndorf (DE)
(74) Vertreter: Pohl, Herbert, Dipl.-Ing.

(57) **Zusammenfassung**

Die Erfindung betrifft einen elektronisch kommutierten Gleichstrommotor mit einem vierphasig bewickelten Ständer, welcher wenigstens vier an Umfang des Ständers gleichmäßig verteilt angeordnete Ständerwicklungen aufweist und einem nx zweipolig magnetisierten Läufer. Bei diesen Gleichstrommotoren sind die Ständerwicklungen als Ring geschaltet und es werden jeweils zwei in Serie geschaltete Ständerwicklungen bestromt.

Diese Gleichstrommotoren weisen bei niedrigen Drehzahlen und beim Starten aus dem Stand starke Drehmomentschwankungen auf. Es ist zur Vermeidung dieses Nachteils vorgeschlagen, alle Ständerwicklungen galvanisch voneinander zu trennen, aus zwei einander im Ständer gegenüberliegende Ständerwicklungen ein Paar zu bilden und die Paare nacheinander zu bestromen.

## Beschreibung

Die Erfindung betrifft einen elektronisch kommutierten Gleichstrommotor mit einem vierphasig bewickelten Ständer, welcher wenigstens vier am Umfang des Ständers gleichmäßig verteilt angeordnete Ständerwicklungen aufweist, und einem n x zweipolig magnetisierten permanentmagnetischen Läufer.

Derartige elektronisch kommutierte Gleichstrommotoren sind bekannt (Aufsatz: W. Wilke "Bürstenlose Gleichstrommotoren" in F + M Heft 4/1988, Seiten 163-169). Bei diesen bekannten Gleichstrommotoren sind die Ständerwicklungen im Ring geschaltet und die elektronische Kommutierungsschaltung ist derart ausgebildet, daß jede Verbindungsstelle von zwei Ständerwicklungen zwischen zwei Transistorschaltern liegt. Die Kommutierungsschaltung wird in der Weise gesteuert, daß in vier aufeinanderfolgenden Zyklen während 90° elektrisch jeweils zwei Transistoren leitend geschaltet sind, wodurch pro Zyklus zwei Reihenschaltungen aus jeweils zwei Ständerwicklungen mit einer Gleichspannungsquelle verbunden sind und mit einem rechteckförmigen Strom bestromt werden.

Der bekannte elektronisch kommutierte Gleichstrommotor hat sich an sich in sehr großen Stückzahlen in der Praxis bewährt. Er weist jedoch den Nachteil auf, daß sein Drehmoment bei niedrigen Drehzahlen oder im Stillstand sehr stark von der Rotorlage abhängig ist. Es kann von 100 % auf 50 % einbrechen, so daß der Anlauf erschwert ist oder bei niedrigen Drehzahlen starke Drehmomentschwankungen auftreten können.

Das der Erfindung zugrunde liegende technische Problem besteht deshalb darin, den bekannten elektronisch kommutierten Gleichstrommotor in der Weise zu verbessern, daß seine Drehmomentschwankungen, insbesondere bei niedrigen Drehzahlen und im Stillstand wesentlich verringert sind.

Dieses technische Problem ist erfindungsgemäß dadurch gelöst, daß die Ständerwicklungen galvanisch voneinander getrennt sind, zwei einander gegenüberliegende Ständerwicklungen ein Paar bilden und die Paare derart mit der Kommutierungsschaltung verbunden sind, daß sie nacheinander bestromt werden.

Bei einem elektronisch kommutierten Gleichstrommotor mit den erfindungsgemäßen Merkmalen schwankt das lageabhängige Drehmoment nur noch zwischen 80 und 100 %, so daß die Drehmomentschwankungen bei niedrigen Drehzahlen und im Stillstand wesentlich geringer als beim bekannten Gleichstrommotor sind. Der neue Gleichstrommotor benötigt bei der Herstellung keine zusätzlichen Bauteile und auch keine anderen Kommutierungsschaltungen. Außer der anderen Verschaltung der Ständerwicklungen ist es lediglich erforderlich, die Lage des Magnet jochs zur Betätigung der Sensormagneten zu verändern.

Der Strom in den Ständerwicklungen weist bei dem neuen Motor eine genauere Rechteckform auf. Das Verhältnis von mittlerem Strom zu Effektivstrom wird dadurch günstiger, so daß sich im Vergleich mit dem bekannten Gleichstrommotor bei gleichem mittleren Strom ein besserer Wirkungsgrad in der Elektronik-Endstufe der Kommutierungsschaltung ergibt.

Der Verlauf der induzierten Spannung ist im Kommutierungszeitpunkt wesentlich flacher als beim bekannten Gleichstrommotor, so daß sich Kommutierungsfehler wesentlich geringer auswirken. Die Unterschiede zwischen Rechts- und Linkslauf sind geringer als beim bekannten Gleichstrommotor.

Der neue Gleichstrommotor ist bezüglich seiner Verwendung mit dem bekannten Gleichstrommotor kompatibel und läßt sich ebenso gut takten und regeln. Bei kleinen Drehzahlen ist die Drehzahlregelung wegen der geringeren Drehmomentwelligkeit erleichtert.

Vorteilhafte Einzelheiten der Erfindung sind in den Ansprüchen 2 und 3 enthalten. Sie ist nachstehend anhand der Figuren 1 bis 6 näher erläutert. Es zeigen:
- Fig. 1: die Schaltungsanordnung eines Ausführungsbeispiels der Erfindung,
- Fig. 2: die Schaltungsanordnung eines anderen Ausführungsbeispiels der Erfindung,
- Fig. 3: die Diagramme der Bestromung der Ständerwicklungen beim erfindungsgemäßen Gleichstrommotor,
- Fig. 4: der Verlauf der in den Ständerwicklungen induzierten Spannungen (EMK) bei der Bestromung gemäß Fig. 3,
- Fig. 5: den Verlauf der Spannungen an den Anschlußklemmen (A, B, C, D) der Ständerwicklungen der Bestromung gemäß Fig. 3 und
- Fig. 6: den Verlauf des Drehmomentes bei der Bestromung gemäß Fig. 3.

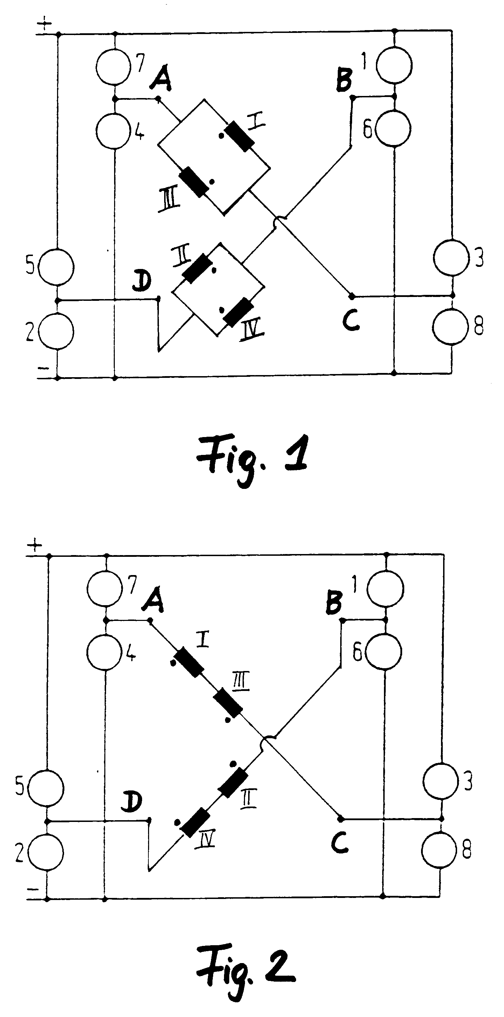

Wie aus den Figuren 1 und 2 zu erkennen ist, entspricht die aus den Transistoren 1 bis 8 bestehende Kommutierungsschaltung der Kommutierungsschaltung bei dem bekannten elektronisch kommutierten Gleichstrommotor. Zwischen jeweils zwei Transistoren ist eine Anschlußklemme (A, B, C, D) für die Ständerwicklungen I, II, III und IV vorgesehen. Bei dem in Fig. 1 gezeigten Ausführungsbeispiel sind die Ständerwicklungen I und III sowie II und IV zu einem Paar zusammengefaßt und parallel geschaltet. Das Paar der Ständerwicklungen I und III liegt zwischen den Anschlußklemmen A und C; das Paar der Ständerwicklungen II und IV liegt zwischen den Anschlußklemmen B und D. Die Ständerwicklungen eines Paares sind antiparallel geschaltet, d.h. der Anfang der einen Ständerwicklung (z.B. I) ist mit dem Ende der anderen Ständerwicklung (III) verbunden.

Die Schaltungsanordnung gemäß Fig. 2 unterscheidet sich von der Schaltungsanordnung gemäß Fig. 1 dadurch, daß die aus den Ständerwicklungen gebildeten Paare in Reihe geschaltet sind. Das Paar aus den Ständerwicklungen I und III ist zwischen den Anschlußklemmen A und C und das Paar aus den Ständerwicklungen II und IV ist zwischen den Anschlußklemmen B und D angeordnet. Die Ständerwicklungen eines Paares sind entgegengesetzt geschaltet, d.h. ihre Enden sind miteinander verbunden.

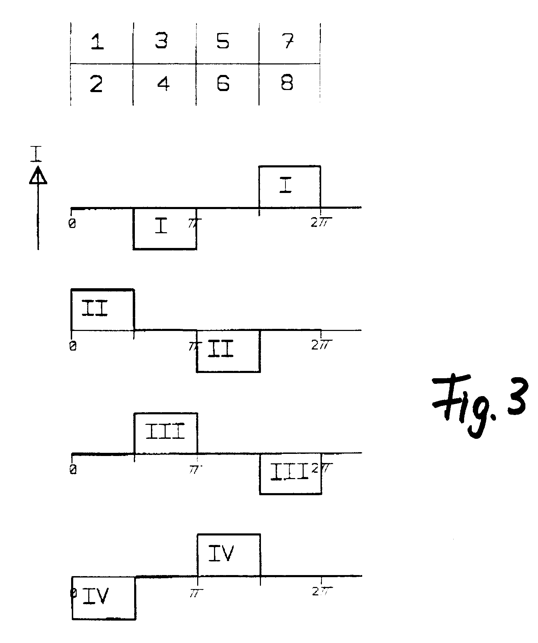

In Fig. 3 ist verdeutlicht, daß die Bestromung der Ständerwicklung dadurch erfolgt, daß jeweils ein Paar der Transistoren 1 bis 8 während 90° elektrisch π/2 geschaltet wird. Fig. 3 zeigt: Zwischen 0 und 90° sind die Transistoren 1 und 2 leitend geschaltet, von 90° bis 180° sind die Transitoren 3 und 4 leitend geschaltet, zwischen 180° und 270° sind die Transistoren 5 und 6 geschaltet und zwischen 270° und 360° sind die Transistoren 7 und 8 leitend geschaltet.

Daraus ergibt sich eine Bestromung, wie sie für die vier Ständerwicklungen I bis IV in Fig. 3 gezeigt ist. Die Ständerwicklung I wird beispielsweise zwischen 90° und 180° sowie zwischen 270° und 360° mit der gezeigten Polarität bestromt.

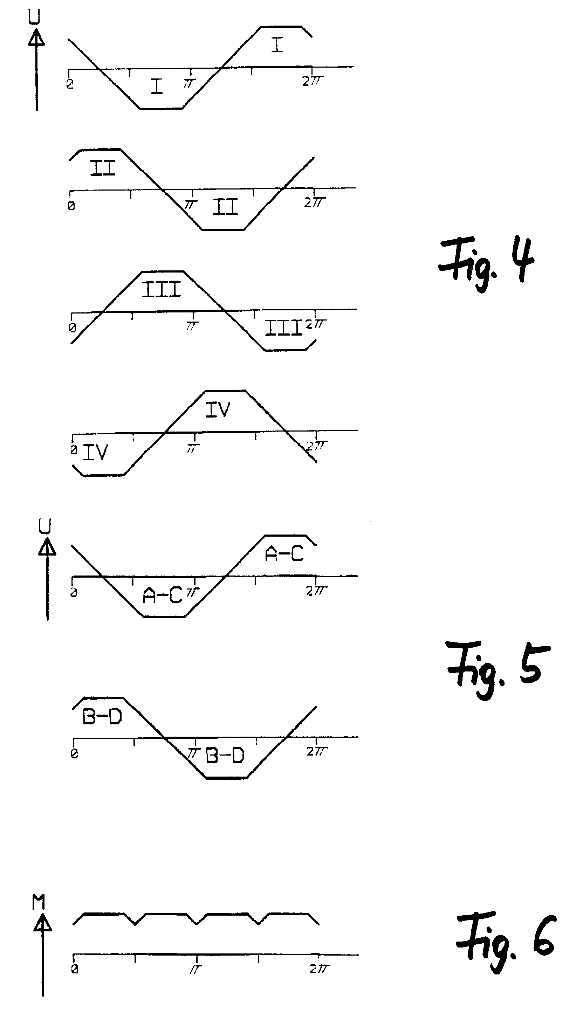

Durch eine solche Bestromung werden - wie in Fig. 4 gezeigt - die Wicklungsspannungen in den Ständerwicklungen I bis IV induziert. Die Spannungen AC und BD an den Anschlußklemmen sind in Fig. 5 gezeigt. Daraus ergibt sich theoretisch ein Verlauf des Motordrehmomentes, wie in Fig. 6 gezeigt, welches nur noch eine geringe Welligkeit aufweist.

## Patentansprüche

1. Elektronisch kommutierter Gleichstrommotor mit einem vierphasig bewickelten Ständer, welcher wenigstens vier am Umfang des Ständers gleichmäßig verteilt angeordnete Ständerwicklungen aufweist, und einem n x zweipolig magnetisierten permanentmagnetischen Läufer, **dadurch gekennzeichnet,** daß die Ständerwicklungen (I, II, III, IV) galvanisch voneinander getrennt sind, zwei einander gegenüberliegende Ständerwicklungen (I, III oder II, IV) ein Paar bilden und die Paare derart mit der Kommutierungsschaltung verbunden sind, daß sie nacheinander bestromt werden.

2. Elektronisch kommutierter Gleichstrommotor nach Anspruch 1, dadurch gekennzeichnet, daß die Ständerwicklungen eines Paares parallel zueinander geschaltet sind.

3. Elektronisch kommutierter Gleichstrommotor nach Anspruch 1, dadurch gekennzeichnet, daß die Ständerwicklungen eines Paares in Reihe geschaltet sind.
